# EUROPÄISCHE PATENTANMELDUNG

(11) **EP 4 787 509 A1**
(43) Veröffentlichungstag der Anmeldung: **05.08.2026**
(21) Anmeldenummer: 26154328.4
(22) Anmeldetag: 27.01.2026
(51) Int. Cl.: H01M 8/248

(54) **BRENNSTOFFZELLENMODUL, BRENNSTOFFZELLENANORDNUNG UND ANTRIEBSEINHEIT FÜR EIN FAHRZEUG SOWIE SELBIGES**

(30) Priorität: 29.01.2025 DE 102025103157
(71) Anmelder: Aerostack GmbH, 72581 Dettingen an der Erms (DE)
(72) Erfinder: HUBERT, Andreas, 72581 Dettingen an der Erms (DE); QUINTUS, Martin, 72581 Dettingen an der Erms (DE); POURNEMAT, Anahid, 72581 Dettingen an der Erms (DE)
(74) Vertreter: LKGLOBAL Partnerschaftsgesellschaft mbB

(57) **Zusammenfassung**

Es werden ein Brennstoffzellenmodul (6) für eine Brennstoffzellenanordnung (2), mit wenigstens einem Brennstoffzellenelement (8), das wenigstens eine Bipolarplatte (10), eine Gasdiffusionslage (11), eine Elektrolytschicht (12) und eine Endplatte (14) umfasst, eine Brennstoffzellenanordnung (2) mit einem entsprechenden Brennstoffzellenmodul (6), eine Antriebseinheit (4) für ein Fahrzeug (1), insbesondere Luftfahrzeug, mit einer entsprechenden Brennstoffzellenanordnung (6), und ein entsprechende Fahrzeug (1), insbesondere Luftfahrzeug, vorgeschlagen, wobei die Gasdiffusionslage (11) aus einem Schichtmaterial gebildet ist, und wobei eine zwischen Bipolarplatte (10) und Endplatte (14) angeordnete Ausgleichslage (15) wenigstens abschnittsweise aus dem gleichen oder zumindest ähnlichem Schichtmaterial gebildet ist.

## Beschreibung

### Technisches Gebiet

Die vorliegende Offenbarung betrifft ein Brennstoffzellenmodul für eine Brennstoffzellenanordnung, eine Brennstoffzellenanordnung für ein Fahrzeug, eine Antriebseinheit für ein Fahrzeug und ein Fahrzeug, insbesondere Luftfahrzeug.

### Technischer Hintergrund

Fahrzeuge mit Brennstoffzellen und entsprechenden Brennstoffzellenmodulen oder -stapeln sind aus dem Stand der Technik bekannt. Beispielsweise Protonenaustauschmembran-Brennstoffzellen (engl. *Proton Exchange Membrane Fuel Cells* - PEMFC) besitzen Bipolarplatten mit Gasflusskanälen (sog. Flussfeldkanäle oder auch Flowfield-Kanäle), die einerseits den Brennstoff als Reduktionsmittel und andererseits in der Regel Luftsauerstoff als Oxidationsmittel über eine Gasdiffusionslage (engl. *Gas Diffusion Layer -* GDL) zu einer Anode bzw. Kathode der Brennstoffzelle führen. Zwischen Anode und Kathode ist eine protonenleitende Membran angeordnet, durch die hindurch aus dem Wasserstoff gewonnene Protonen von Anode zu Kathode wandern, um mittels davon abgeschiedener Elektronen ein nutzbares elektrisches Potential bereitzustellen. Dieser Aufbau einer Brennstoffzelle mit Bipolarplatten, Gasdiffusionslage und protonenleitender Membran wird in Stapelform wiederholt, um besagte Brennstoffzellenmodule bzw. -stapel bereitzustellen.

Auch für Luftfahrzeuge werden derzeit alternative Antriebe auf Wasserstoffbasis entwickelt, um fossile Brennstoffe zu ersetzen und deren Auswirkungen auf die Umwelt zu vermeiden. Brennstoffzellen in Flugzeugen können Wasserstoff für ihren Antrieb und zur Stromerzeugung und Hilfsturbinen (engl. *Auxiliary Power Units* - APUs) ersetzen. Insbesondere in der Verwendung von Wasserstoff wird ein Weg zu einer umweltfreundlichen und nachhaltigen Luftfahrt gesehen, weil dadurch eine Freisetzung von Kohlendioxid oder andere kohlenwasserstoffbezogene Emissionen vermieden werden können.

CN 109216722 B betrifft eine dickenausgleichende Kollektorplatte für einen Brennstoffzellenstapel, einen Brennstoffzellenstapel und ein Optimierungsverfahren dafür. Eine Verdickungs- oder Verdünnungsbearbeitung an bestimmten Bereichen der Stromsammelplatte soll durchgeführt werden, um die Dicke verschiedener Teile des gesamten Brennstoffzellenstapels anzugleichen und so eine angemessene Verteilung der Montagekraft in verschiedenen Bereichen auf der Stapeloberfläche zu erreichen. Zu den verdickten oder verdünnten Bereichen gehören die Bereiche auf der Stromsammelplatte, die mit dem Strömungskanal der Bipolarplatte in Kontakt stehen, oder die Bereiche auf der Stromsammelplatte, die mit dem Strömungskanalbereich der Bipolarplatte und dem Flüssigkeitsverteilungsbereich in Kontakt stehen, sowie andere Bereiche, die eine Dickenanpassung erfordern. Die Anpassung der Dicke jedes Teils des Brennstoffzellenstapels soll erreicht und die Kraft der Brennstoffzellenstapelbaugruppe auf jeden Bereich auf der Stapelfläche angemessen verteilt werden können, wodurch der interne Kontaktwiderstand des Brennstoffzellenstapels effektiv verringert und die Stromerzeugungsleistung des Brennstoffzellenstapels verbessert werden soll. Die Stromsammelplatte mit Dickenausgleich für einen Brennstoffzellenstapel eignet sich wohl für den Zusammenbau eines Protonenaustauschmembran-Brennstoffzellenstapels und eines Direktalkohol-Brennstoffzellenstapels.

CA 2 851 692 A1 betrifft einen Brennstoffzellenstapel für ein Brennstoffzellensystem mit einer Vielzahl von Einheitszellen, die eine zwischen Separatorplatten aus einem elektrisch leitfähigen Material angeordnete Membran-Elektroden-Einheit umfassen. Endplatten des Brennstoffzellenstapels weisen eine von einer Gestaltung der Separatorplatten abweichende Gestaltung auf. Auf einer ersten Außenseite der Endplatte ist ein Stromabnehmerelement mittels eines leitfähigen Klebstoffs befestigt. Zweite Seiten der Endplatten sind im Brennstoffzellenstapel einander zugewandt. Die Erfindung betrifft weiterhin ein Brennstoffzellensystem mit einem solchen Brennstoffzellenstapel sowie ein Fahrzeug mit einem Brennstoffzellensystem.

WO 2008/089553 A1 beschreibt einen Brennstoffzellenstapelmit einer oberen Endplatte und einer untere Endplatte sowie mit mehreren Brennstoffzellen, die übereinander zwischen der oberen und der unteren Endplatte angeordnet sind, wobei jede Zelle eine Membran-Elektroden-Anordnung zwischen zwei elektrisch leitenden Strömungsfeldplatten aufweist; und ein in den Brennstoffzellenstapel eingebettetes Kompressionssystem, das mindestens eine Kompressionsplatte umfasst, um während des Stapelbetriebs einen im Wesentlichen konstanten Druck zwischen den Brennstoffzellen aufrechtzuerhalten.

Zur Bereitstellung von Brennstoffzellenanordnungen mit möglichst hoher elektrischer Leistung kann ihre Leistungsdichte erhöht werden. Eine Erhöhung der Leistungsdichte erfordert eine Gewichtsbegrenzung und/oder Verkleinerung der Brennstoffzellenanordnung und ihrer Komponenten. Eine Möglichkeit zur Gewichtsreduktion bzw. Verkleinerung besteht in einer möglichst dünnen Ausführung der Platten, Lagen und Schichten der Brennstoffzellenelemente.

Bei aus dem Stand der Technik bekannten Brennstoffzellenanordnung besteht also einerseits Verbesserungspotential bei der Gewichtseinsparung und Verkleinerung. Andererseits kann dies zu Fertigungs- und Stabilitätsproblemen führen, insbesondere wenn die Brennstoffzellenelemente immer dünner ausgeführt werden. Durch die immer dünnere Ausführung können gewisse Maßabweichungen und -toleranzen der Komponenten zu Problemen sowohl bei der Fertigung als auch im Betrieb von Brennstoffzellenstapeln führen.

### Beschreibung

Es kann als Aufgabe betrachtet werden, bei der Herstellung von Brennstoffzellenmodulen Gewicht und/oder Platz zu sparen, ohne dabei ihre Fertigungs- und Betriebseigenschaften zu beeinträchtigen. Insbesondere kann es als Aufgabe betrachtet werden, Herausforderungen von Höhen- / Dickenabweichungen verschiedener Brennstoffzellenkomponenten zu bewältigen, die in der Produktions- und/oder Montagephase auftreten können, und die Kompressionshomogenität über den aktiven Bereich zu verbessern sowie die elektrischen Kontaktwiderstände zwischen den Komponenten zu verringern. Diese Aufgabe wird durch den Gegenstand des unabhängigen Anspruchs 1 sowie der nebengeordneten Ansprüche 8, 9 und 10 gelöst.

Weitere Ausführungsformen ergeben sich aus den abhängigen Ansprüchen sowie aus der folgenden Beschreibung. Dabei in Bezug auf Verfahren zur Bereitstellung von Brennstoffzellenmodulen beschriebenen Merkmale sowie entsprechende Verfahrensschritte können als Vorrichtungsmerkmale implementiert werden oder umgekehrt. Im Zusammenhang mit dem Verfahren stehende Abschnitte der Beschreibung gelten also in analoger Weise auch für eine Herstellungsvorrichtung für Brennstoffzellenmodule sowie Computerprogramme zu deren Steuerung. Insbesondere können Verfahrensschritte und damit zusammenhängend erwähnte Komponenten als Funktionen einer Herstellungsvorrichtung sowie entsprechenden Computerprogramme implementiert sein und beliebige Funktionen der Herstellungsvorrichtung können als Verfahrensschritte implementiert werden.

Insbesondere wird die Aufgabe gelöst durch ein Brennstoffzellenmodul für eine Brennstoffzellenanordnung, mit wenigstens einem Brennstoffzellenelement, das wenigstens eine Bipolarplatte, eine Gasdiffusionslage, eine Elektrolytschicht und eine Endplatte umfasst, wobei die Gasdiffusionslage aus einem Schichtmaterial gebildet bzw. geformt oder bereitgestellt ist, und wobei eine zwischen Bipolarplatte und Endplatte angeordnete Ausgleichslage wenigstens abschnittsweise aus dem gleichen oder zumindest ähnlichem Schichtmaterial gebildet ist.

Bei einer Brennstoffzellenanordnung für ein Fahrzeug, insbesondere Luftfahrzeug, wird die Aufgabe dadurch gelöst, dass die Brennstoffzellenanordnung wenigstens ein entsprechendes Brennstoffzellenmodul umfasst.

Bei einer Antriebseinheit für ein Fahrzeug, insbesondere Luftfahrzeug, wird die Aufgabe dadurch gelöst, dass die Antriebseinheit wenigstens eine entsprechende Brennstoffzellenanordnung umfasst.

Bei einem Fahrzeug, insbesondere Luftfahrzeug wird die Aufgabe durch ein entsprechendes Brennstoffzellenmodul und/oder eine entsprechende Antriebseinheit gelöst.

Die Ausgleichslage kann eine gewisse Elastizität aufweisen. Beispielsweise kann die Ausgleichslage aus dem gleichen Material wie die Gasdiffusionslage gebildet sein, womit Gasdiffusionslagen und Ausgleichslagen die gleichen Eigenschaften bei der Verspannung aufweisen. Für die Gasdiffusionslagen eingesetztes Material kann ohne Nutzung seiner eigentlichen Diffusionsfunktion als Ausgleichslage verwendet werden. Dadurch kann die Homogenität der Kompression einzelner Komponenten des Brennstoffzellenmodul generell erhöht, die Höhentoleranzen im Stapel, insbesondere der Endplatte, ausgeglichen und Kontaktwiderstand zwischen Endplatte und Stromkollektor verringert werden.

Eine derartige Lösung kann insbesondere bei Konstruktionen mit geringem Gewicht hilfreich sein, bei denen Gasdiffusionslagen mit niedrigem Druckverformungsrest eingesetzt werden. Die vorgeschlagene Lösung bietet eine einfache Lösung zum Toleranzausgleich bei einer Verwendung sehr dünner Komponenten zur Bereitstellung von Brennstoffzellenmodulen mit möglichst hoher gravimetrischer Leistungsdichte. Die Lösung hat also eine Vielzahl von Vorteilen gegenüber dem Stand der Technik, indem sie eine zufriedenstellend reproduzierbare Fertigung von Brennstoffzellenmodulen mit hoher gravimetrischer Leistungsdichte und stabilen Betriebseigenschaften ermöglicht.

Gemäß einer Ausführungsform kann vorgesehen sein, dass jeweils eine Ausgleichslage zwischen den beiden Endplatten und einer der Bipolarplatten des Brennstoffzellenmoduls angeordnet ist. So kann jeweils eine Ausgleichslage an beiden Enden bzw. einer Ober und Unterseite einer Zellreihengruppierung angeordnet sein, die eine Vielzahl von Brennstoffzellenelementen bzw. -anordnungen umfasst, die jeweils eine Bipolarplatte, eine Gasdiffusionslage und eine Elektrolytschicht besitzen. Somit kann am Brennstoffzellenmodul an zwei sich gegenüberliegenden Seiten ein Toleranzausgleich geschaffen werden, womit sich Höhentoleranzen im Stapel, insbesondere im Bereich der der Endplatten, weiter ausgleichen und jeweilige Kontaktwiderstände zwischen Endplatte und Stromkollektor verringert werden können.

Gemäß einer Ausführungsform kann vorgesehen sein, dass die Ausgleichslage eine höhere Kompressibilität als übrige Gasdiffusionslagen aufweist. Die Ausgleichslage kann zumindest abschnittweise in einem komprimierten Zustand im Brennstoffzellenmodul vorliegen. Beispielsweise kann die Ausgleichslage wenigstens teilweise eine größere Dicke aufweisen als die Gasdiffusionslagen. Somit kann ein ausreichender Toleranzausgleich geschaffen werden, was weiter dabei hilft, Höhentoleranzen im Stapel, insbesondere im Bereich der der Endplatten, auszugleichen und jeweilige Kontaktwiderstände zwischen Endplatte und Stromkollektor zu verringern.

Gemäß einer Ausführungsform kann vorgesehen sein, dass eine Schichtstärke der Ausgleichslage zwischen 0,1 und 0,3 mm beträgt. Die Schichtstärke kann den jeweiligen Anforderungen gemäß in einem Bereich gewählt werden, in dem sie zum einen den gewünschten Toleranzausgleich ermöglicht und zum anderen nicht unnötig zur Vergrößerung der Brennstoffzellenanordnung beiträgt. Dies hilft weiter dabei, Brennstoffzellenanordnungen mit möglichst höher Leistungsdichte bereitzustellen, ohne dabei ihre Fertigungs- und Betriebseigenschaften zu beeinträchtigen.

Gemäß einer Ausführungsform kann vorgesehen sein, dass eine unkomprimierte Schichtstärke der Ausgleichslage weniger als 0,25 mm, vorzugsweise weniger als 0.2 mm, höchst vorzugsweise unter 0,18 mm beträgt. Die unkomprimierte Schichtstärke kann je nach zu erwartendem Kompressionsgrad der Ausgleichslage im verbauten Zustand gewählt werden. Dies hilft, den Toleranzausgleich weiter zu verbessern.

Gemäß einer Ausführungsform kann vorgesehen sein, dass die Ausgleichslage zumindest abschnittsweise ein Substrat und/oder eine mikroporöse Schicht umfasst. Gasdiffusionslagen umfassen in der Regel ebenfalls ein Substrat mit einer mikroporösen Schicht (*microporous layer -* MLP), die eigentlich zu einer feinen und homogenen Verteilung der durch sie hindurch die von dir genannte Gase beitragen soll. Die Ausgleichslage mit einem gleichartigen oder zumindest ähnlichen Aufbau bereitzustellen hilft weiter dabei, dass Ausgleichslagen und Gasdiffusionslagen bei der Verspannung gleiche oder zumindest sehr ähnliche Eigenschaften aufweisen, womit sich der Toleranzausgleich verbessern lässt.

Gemäß einer Ausführungsform kann vorgesehen sein, dass die Ausgleichslage ein Hydrophobierungsmittel beinhaltet. Beispielsweise beinhalten Gasdiffusionslagen Poly-Tetra-Fluor-Ethylen (PTFE) als Hydrophobierungsmittel, das wasserabweisende Eigenschaften verleiht. Die Ausgleichslage ebenfalls mit Hydrophobierungsmittel zu versehen hilft einerseits dabei, die mechanischen bzw. physikalischen Eigenschaften der Ausgleichslage weiter an diejenigen der Gasdiffusionslagen anzupassen. Zum anderen kann die Ausgleichslage somit ebenfalls wasserabweisend ausgestaltet sein. Auf diesem Wege können die Eigenschaften der Ausgleichslagen weiter an die der Gasdiffusionslagen angepasst werden, womit sich der Toleranzausgleich weiter verbessern lässt.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Draufsicht eines Ausführungsbeispiels eines Fahrzeugs in Form eines Luftfahrzeugs; und
- Fig. 2: eine schematische Vorderansicht eines Ausführungsbeispiels eines Brennstoffzellenmoduls des in Fig. 1 gezeigten Fahrzeugs.

### Detaillierte Beschreibung

Die folgende detaillierte Beschreibung ist lediglich beispielhafter Natur und soll die Erfindung und deren Verwendungsmöglichkeiten nicht einschränken. Darüber hinaus besteht keine Absicht, sich an im vorstehenden Hintergrund oder in folgender detaillierter Beschreibung Dargelegtes zu binden. Die Darstellungen und Abbildungen in den Zeichnungen sind schematisch und nicht maßstabsgetreu. Gleiche Elemente sind Regel gleich bezeichnet und mit gleichen Bezugszeichen versehen. Ein verbessertes Verständnis des beschriebenen Gegenstands kann durch eine Zusammenschau der Abbildungen und ihrer detaillierten Beschreibung erlangt werden.

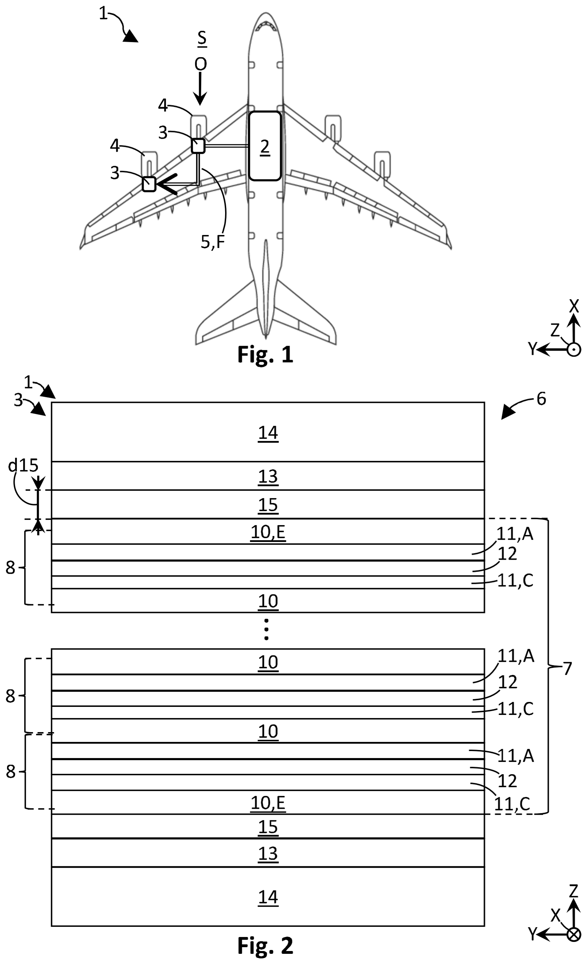

Fig. 1 zeigt eine schematische Draufsicht eines Ausführungsbeispiels eines Fahrzeugs 1 in Form eines Luftfahrzeugs. Das Fahrzeug 1 umfasst ein Brennstoffreservoir 2, Brennstoffzellenanordnungen 3 und Antriebseinheiten 4.

Vom Brennstoffreservoir 2, beispielsweise einem Tank, wird ein Reduktionsgas F bzw. Brennstoff, wie beispielsweise Wasserstoff, über Gasleitungen 5 zu den Brennstoffzellenanordnungen 3 geliefert, die bei der Umwandlung des Reduktionsgases F mit einem Oxidationsgas O, wie beispielsweise aus der das Fahrzeug umgebenden Atmosphäre S entnommener Luft, elektrische Energie erzeugen, die wiederum den Antriebseinheiten 4 zum Antrieb des Fahrzeugs bereitgestellt wird. Das Fahrzeug 1 erstreckt sich in einer Längsrichtung X, Querrichtung Y und Höhenrichtung Z, die gemeinsam ein kartesisches Koordinatensystem aufspannen.

Fig. 2 zeigt eine schematische Vorderansicht eines Brennstoffzellenmoduls 6 des in Fig. 1 gezeigten Fahrzeugs 1. Als Teil der Brennstoffzellenanordnungen 3 umfasst das Brennstoffzellenmodul 6 eine Zellreihengruppierung 7, auch genannt Zellstapel (*Cell Row Assembly -* CRA), die eine Reihe von Brennstoffzellenelementen 8 bzw. einzelne Zellanordnungen umfasst. Jedes Brennstoffzellenelement 8 umfasst eine Bipolarplatte 10, zwei Gasdiffusionslagen 11 und eine Elektrolytschicht 12.

Die Bipolarplatten 10 sind jeweils zwischen den zwei Gasdiffusionslagen 11 aufgenommen, nämlich einer anodenseitigen A Gasdiffusionslage 11 und einer kathodenseitigen C Gasdiffusionslage 11. Zwischen den Gasdiffusionslagen 11 zweier aneinander angrenzender Brennstoffzellenelemente 8 ist die Elektrolytschicht 12, beispielsweise in Form einer Membran mit Katalysator- und lonomerbeschichtung (*Cathalyst Coded Membrane -* CCM) angeordnet. Jeweils eine Abschlussseite E ausbildende Bipolarplatte 10 bzw. Abschlussplatte schließt die Zellreihengruppierung 7 ab.

Stromsammler 13 des Brennstoffzellenmoduls 6 liegen außen an den abschlussseitigen E Bipolarplatten 10 an, um von der Zellreihengruppierung 7 bei der Umwandlung des Reduktionsgas F und des Oxidationsgases O erzeugten elektrischen Strom abzunehmen. An den Stromsammlern 13 liegt wiederum jeweils eine Endplatte 14 des Brennstoffzellenmoduls 6 außen an, welche die Zellreihengruppierung 7 nach außen elektrisch isoliert. Die Zellreihengruppierung 7 umfasst also in der Regel eine den jeweiligen Anforderungen entsprechende Anzahl von Brennstoffzellenelementen 8 mit Bipolarplatten 10, Gasdiffusionslagen 11 und Elektrolytschichten 12, wobei die Anzahl von Zellreihengruppierungen 7 beispielsweise 300 bis 500, beispielsweise ca. 400 betragen kann, um durch entsprechende Spannungsaddition eine benötigte elektrische Gesamtspannung bereitzustellen.

Im vorliegenden Ausführungsbeispiel ist zusätzlich jeweils eine Ausgleichslage 15 zwischen der die Abschlussseite E bildenden Bipolarplatte 10 und dem jeweiligen Stromsammler 13 angeordnet. Die Ausgleichslage 15 kann eine im Wesentlichen parallel zur Höhenrichtung Z gemessene Schichtstärke d15 von zwischen 0,1 und 0,3 mm besitzen. Eine unkomprimierte Schichtstärke d15' der Ausgleichslage kann weniger als 0,25 mm, vorzugsweise weniger als 0.2 mm, höchst vorzugsweise unter 0,18 mm betragen.

Die Ausgleichslage 15 kann ein Substrat mit einer mikroporösen Schicht (MLP) und/oder ein Hydrophobierungsmittel beinhalten. Beispielsweise kann die Ausgleichslage 15 aus dem gleichen Material wie die Gasdiffusionslagen 11 bereitgestellt sein. Eine Kompressibilität bzw. der Ausgleichslage 15 kann grösser als eine Kompressibilität der Gasdiffusionslagen 11 gewählt werden, z.B. indem die Schichtstärke d15 der Ausgleichslage grösser ist als die einer der Gasdiffusionslagen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Fahrzeug / Luftfahrzeug
- 2: Brennstoffreservoir / Tank
- 3: Brennstoffzellenanordnung
- 4: Antriebseinheit
- 5: Brennstoffleitung
- 6: Brennstoffzellenmodul
- 7: Zellenreihengruppierung
- 8: Brennstoffzellenelement / Zellanordnung

- 10: Bipolarplatte
- 11: Gasdiffusionslage
- 12: Elektrolytschicht
- 13: Stromsammler
- 14: Endplatte
- 15: Ausgleichslage

- d₁₅: Schichtdicke Ausgleichslage

- A: Anodenseite
- C: Kathodenseite
- E: Abschlussseite/Abschlussplatte
- F: Reduktionsgas / Brennstoff
- O: Oxidationsgas
- S: Atmosphäre/Umgebung
- X: Längsrichtung
- Y: Querrichtung
- Z: Höhenrichtung

## Patentansprüche

1. Brennstoffzellenmodul (6) für eine Brennstoffzellenanordnung (2), mit wenigstens einem Brennstoffzellenelement (8), das wenigstens eine Bipolarplatte (10), eine Gasdiffusionslage (11), eine Elektrolytschicht (12) und eine Endplatte (14) umfasst, wobei die Gasdiffusionslage (11) aus einem Schichtmaterial gebildet ist, und wobei eine zwischen Bipolarplatte (10) und Endplatte (14) angeordnete Ausgleichslage (15) wenigstens abschnittsweise aus dem gleichen oder zumindest ähnlichem Schichtmaterial gebildet ist.

2. Brennstoffzellenmodul (6) nach Anspruch 1, **dadurch gekennzeichnet, dass** jeweils eine Ausgleichslage (15) zwischen den beiden Endplatten (14) und einer der Bipolarplatten (10) des Brennstoffzellenmoduls (6) angeordnet ist.

3. Brennstoffzellenmodul (6) nach Anspruch 1 oder 2, **dadurch gekennzeichnet, dass** die Ausgleichslage (15) eine höhere Kompressibilität als übrige Gasdiffusionslagen (11) aufweist.

4. Brennstoffzellenmodul (6) nach wenigstens einem der oben genannten Ansprüche, **dadurch gekennzeichnet, dass** eine Schichtstärke (d15) der Ausgleichslage (15) zwischen 0,1 und 0,3 mm beträgt.

5. Brennstoffzellenmodul (6) nach wenigstens einem der oben genannten Ansprüche, **dadurch gekennzeichnet, dass** eine unkomprimierte Schichtstärke (d15') der Ausgleichslage weniger als 0,25 mm, vorzugsweise weniger als 0.2 mm, höchst vorzugsweise unter 0,18 mm beträgt.

6. Brennstoffzellenmodul (6) nach wenigstens einem der oben genannten Ansprüche, **dadurch gekennzeichnet, dass** die Ausgleichslage (15) zumindest abschnittsweise ein Substrat und/oder eine mikroporöse Schicht umfasst.

7. Brennstoffzellenmodul (6) nach wenigstens einem der oben genannten Ansprüche, **dadurch gekennzeichnet, dass** die Ausgleichslage ein Hydrophobierungsmittel beinhaltet.

8. Brennstoffzellenanordnung (2) für ein Fahrzeug (1), insbesondere Luftfahrzeug, **dadurch gekennzeichnet, dass** die Brennstoffzellenanordnung (6) wenigstens ein Brennstoffzellenmodul (6) nach wenigstens einem der Ansprüche 1 bis 7 umfasst.

9. Antriebseinheit (4) für ein Fahrzeug (1), insbesondere Luftfahrzeug, **dadurch gekennzeichnet, dass** die Antriebseinheit (4) wenigstens eine Brennstoffzellenanordnung (5) nach Anspruch 8 umfasst.

10. Fahrzeug (1), insbesondere Luftfahrzeug, **gekennzeichnet durch** wenigstens ein Brennstoffzellenmodul (6) nach Anspruch 8 und/oder eine Antriebseinheit (4) nach Anspruch 9.
